# EUROPÄISCHE PATENTSCHRIFT

(11) **EP 0 835 193 B1**
(45) Veröffentlichungstag und Bekanntmachung des Hinweises auf die Patenterteilung: **28.07.1999**
(21) Anmeldenummer: 96922858.4
(22) Anmeldetag: 20.06.1996
(51) Int. Cl.: B60R 21/16

(54) **AIRBAGMODUL**
AIRBAG MODULE
MODULE AIRBAG

(30) Priorität: 27.06.1995 DE 19522765
(43) Veröffentlichungstag der Anmeldung: 15.04.1998
(73) Patentinhaber: BSRS Restraint Systems GmbH, 63755 Alzenau (DE)
(72) Erfinder: ZIMMERMANN, Michael, D-63755 Alzenau (DE)
(74) Vertreter: Fuchs Mehler Weiss & Fritzsche
(86) Internationale Anmeldenummer: EP9602670
(87) Internationale Veröffentlichungsnummer: WO9701459

(56) Entgegenhaltungen:
- EP-A- 0 495 409
- DE-A- 2 163 919
- DE-A- 2 542 764
- DE-A- 4 011 492
- FR-A- 2 131 070
- FR-A- 2 203 956
- GB-A- 1 473 794
- PATENT ABSTRACTS OF JAPAN vol. 94, no. 010 & JP,A,06 286568 (HINO MOTORS LTD), 11.Oktober 1994,
- PATENT ABSTRACTS OF JAPAN vol. 14, no. 514 (M-1046), 13.November 1990 & JP,A,02 212239 (TENRYU KOGYO K.K.), 23.August 1990,

## Beschreibung

Die Erfindung betrifft ein Airbagmodul zur Anwendung vorzugsweise in einem Kraftfahrzeug.

Airbags als passives Rückhaltesystem findet längerem im Kraftfahrzeugbau Anwendung. Bekannte Module weisen üblicherweise einen Gasgenerator auf, der auf ein Auslösesignal hin schlagartig Gas in einen Luftsack leitet. Der Luftsack weist eine Luftaustrittsöffnung auf, durch welche das Gas nach einer Verweildauer im Luftsack aus diesem ausströmt. Das Auslösesignal wird üblicherweise von einem Crashsensor generiert.

Betriebsbereite Airbags befinden sich zusammengefaltet in einer Kapsel. Wird nun der Gasgenerator aktiviert, strömt Gas in den Luftsack hinein, welcher daraufhin die Kapsel sprengt, worauf der Luftsack vom Gas auf volle Größe aufgeblasen wird, um für eine bestimmte Zeitdauer, beispielsweise 30 ms., die Fahrzeuginsassen vor den Folgen des Aufpralls zu schützen. Nach Erreichen des maximalen Innendruckes im Luftsacke entweicht das Gas durch die Luftaustrittsöffnung.

Grundsätzlich haftet den bekannten Airbagmodulen das Problem an, innerhalb einer sehr kurzen Zeitdauer einen genügend hohen Gasinnendruck im Luftsack bereitzustellen, um ein Eintauchen von Kürperteilen der Fahrzeuginsassen abzudämpfen. Bei bekannten Modulen kann jedoch der Fall auftreten, daß Körperteile bereits in den Luftsack eintauchen, wenn der aufgebaute Innendruck noch nicht hoch genug ist, um die Dämpfungswirkung voll zu entfalten.

Diese Problematik soll anhand der beiden Zeichnungsfiguren 1 und 2 verdeutlicht werden.

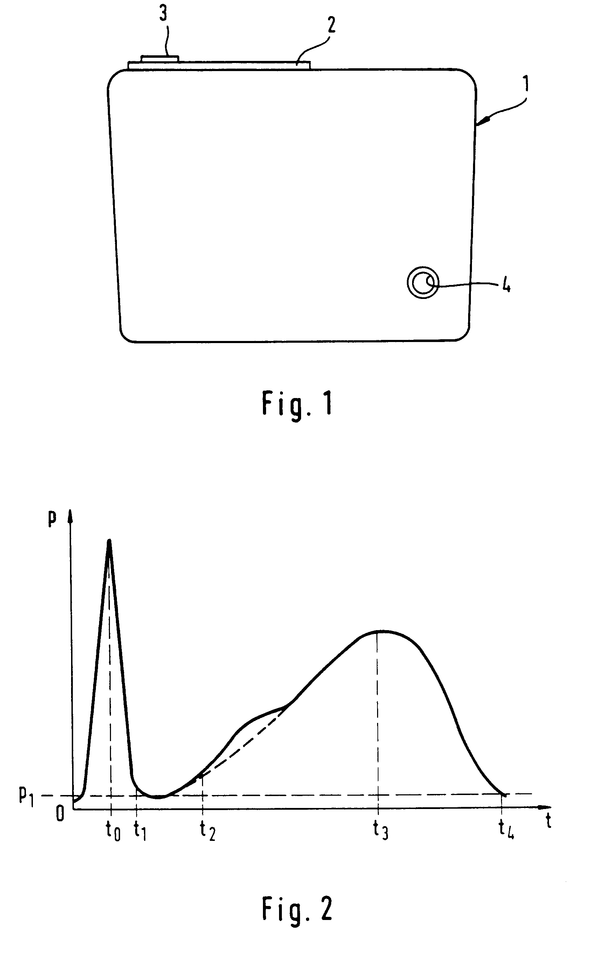

Fig. 1 zeigt einen bekannten Luftsack 1, der mit einer Montageplatte 2 für einen Gasgenerator (nicht dargestellt) versehen ist. Der Gasgenerator ist angeschlossen an dem Einlaßstutzen 3, durch welchen im Aktivierungsfall Gas in das Innere des Luftsackes 1 strömt. Der Luftsack ist mit einer Luftaustrittsöffnung oder venthole 4 versehen, welche ständig geöffnet ist.

Das zeitliche Verhalten dieses bekannten Airbags läßt sich anhand des zeitlichen Verlaufs des Innendrucks P im Luftsack 1 gemäß Fig. 2 nachempfinden.

Der Luftsack 1 ist - wie bereits erwähnt - im betriebsbereiten Zustand in einer Kapsel platzparend gefaltet, Zum Zeitpunkt t = 0 wird nun der Gasgenerator gezündet und Gas strömt in den Luftsack 1, woraufhin der Innendruck des Gases im Luftsack schlagartig ansteigt.

Wie bereits ausgeführt, ist die Luftaustrittsöffnung 4 ständig geöffnet d. h. auch während des Füllvorganges strömt Gas aus der Öffnung 4 heraus, so daß man also anschaulich von einer Leckage während des Füllvorganges sprechen kann.

Im dargestellten Verlauf weicht der stetige Ansteig des Innendruckes im Luftsack ab dem Zeitpunkt t₂ vom normalen Verlauf (gestrichelt dargestellt) ab und steigt überproportional an. Dies symbolisiert den Kontakt mit dem Körper des Fahrzeuginsassen, wodurch das Luftsackvolumen kurzzeitig durch das Eindrücken verringert wird, so daß in der Folge der Druck gegenüber dem normalen ungestörten Verlauf kurzzeitig erhöht wird.

Der Zeitpunkt t₂ und der dann bereits im Luftsack aufgebaute Innendruck sind die beiden kritischen Werte. Würde nämlich der Körperkontakt früher als zum Zeitpunkt t₂ eintreten, wäre noch nicht genügend Gas im das Innere des Luftsackes geströmt, um durch den dann bereits aufgebauten Druck eine dampfende Wirkung entfalten zu können. Dies ist auf die von Anfang an wirkende Leckage aufgrund der Luftaustrittsöffnung 4 zurückzuführen.

Es gibt bereits Airbagmodule, mit denen versucht wurde, das beschriebene Problem wenigstens ansatzweise zu lösen. So zeigen die Druckschriften DE-A-21 63 919 und die GB-A-1 473 794 jeweils ein Airbagmodul mit einem Gasgenerator, der auf ein Auslösesignal hin schlagartig Gas in einen Luftsack aus im wesentlichen luftundurchlässigen Material leitet, der eine Luftaustrittsöffnung aufweist, durch welche das Gas nach einer Verweildauer im Luftsack aus diesem ausströmt, wobei die Luftaustrittsöffnung ihren wirksamen Öffnungsquerschnitt nach Aktivieren des Moduls zeitverzögert freigibt. Ziel dieser Konstruktionen war es, die Druckschwankungen innerhalb des Luftsackes möglichst zu reduzieren, was jedoch nur ansatzweise gelang. Der JP-A-06286568 ist ein weiteres Modul entnehmbar, bei dem die Auslaßöffnung des Luftsackes in einem taschenförmigen Zusatzteil im Inneren des nicht aktivierten Luftsackes untergebracht ist.

Vor diesem Hintergrund ist es nun die Aufgabe der vorliegenden Erfindung, das gattungsgemäße Airbagmodul so weiterzubilden, daß sein dynamisches Dämpfungsverhalten noch weiter verbessert wird.

Demzufolge wird vorgeschlagen, daß die Luftaustrittsöffnung am Ende eines schlauchförmigen Ansatzes am Luftsack angeordnet ist, welcher im nichtbefüllten Zustand des Luftsackes in diesen hineingestülpt ist. Dies bewirkt, daß die Luftaustrittsöffnung ihren wirksamen Öffnungsquerschnitt so zeitverzögert freigibt, daß der Gasdruck im Inneren des Luftsackes für eine Zeitdauer von bis zu 50 Milisekunden im wesentlichen konstant bleibt.

Wird der Airbag aktiviert, so strömt zunächst kein Gas aus der am Ende des in das Luftsackinnere gerichteten Schlauches vorgesehenen Luftaustrittsöffnung, so daß also direkt nach dem vollständigen Auffalten des Luftsackes sämtliches Gas zum Druckaufbau zur Verfügung steht. Während des Füllvorganges nun wird der schlauchförmige Ansatz vom Luftsackinneren nach außen gedrängt, so daß gleichzeitig also eine Volumenzunahme zu verzeichnen ist, wodurch das Plateau konstanten Innendruckes im Luftsack erzielt wird. Erst am Ende des Innendruckplateaus wird die Öffnung am Schlauchende freigegeben, so daß Gas aus dem Luftsack ausströmen kann.

Die Zeitdauer der Periode im wesentlichen konstanten Innendruckes ist dabei eine Funktion der Länge und des Durchmessers des schlauchartigen Ansatzes. Je länger der Schlauch ist, desto später wird die Luftaustrittsöffnung frei sein und dementsprechend Gas aus dem Luftsack nach außen strömen lassen. Insbesondere ist die wirksame Länge des Schlauches ein bestimmender Parameter, worunter jene Länge verstanden wird, die im betriebsbereiten Zustand des Airbagmoduls in das Innere des Luftsackes gestülpt ist. Durch die beiden Parameter läßt sich der Innendruckverlauf vorgeben.

Mit dem erfindungsgemäßen Airbagmodul wird also gegenüber bekannten Airbagmodulen eine Sicherheitsreserve im zeitlichen Verlauf des Innendruckes im Luftsack erzielt.

Die Erfindung wird anhand eines Ausführungsbeispieles gemäß der Zeichnungsfiguren näher erläutert. Hierbei zeigt:
- Fig. 3: die schematische Aufsicht auf einen Luftsack des Airbagmoduls, und
- Fig. 4: den zeitlichen Verlauf des Innendruckes im Luftsack nach Aktivierung des Airbagmoduls im Vergleich zu dem typischen Verlauf bei bekannten Airbags (gestrichelt).

Der Luftsack weist wie jeder bekannte Luftsack eine Anschlußplatte 20 für einen Gasgenerator (nicht dargestellt) auf, welcher über einen Einfüllstützen 30 mit dein Luftsack 10 in Verbindung steht.

Im vorliegenden Ausführungsbeispiel ist an der rechten, unteren Ecke ein Schlauch 50 angeformt, der an seinem Ende die Luftaustrittsöffnung 40 aufweist. Der Schlauch 50 ist im betriebsbereiten Zustand des Airbags nach innen gestülpt, wie dies durch die gestrichelten Linien angedeutet ist. In durchgezogenen Linien ist der Luftsack 50 nach erfolgter Aktivierung des Airbagmoduls dargestellt mit nach außen gestülpten Schlauch 50.

Die Verhaltenweise des Luftsackes 10 des erfindungsgemäßen Airbagmoduls wird anhand Fig. 4 erläutert. Diese zeigt den zeitlichen Verlauf des Innendruckes im Luftsack 10 nach Aktivierung des Airbagmoduls im Zeitpunkt t = 0. Die Darstellung ist analog zu jener aus Fig. 2. Zur Verdeutlichung des Gewinns der Sicherheitsreserve ist der Graph aus Fig. 2 in Fig. 4 gestrichelt dargestellt.

Bis zum Zeitpunkt t₁ entspricht das Verhalten jenem des Luftsackes eines Airbagmoduls gemäß dem Stand der Technik völlig. Daher wird zur Vermeidung von Wiederholung auf die Erläuterungen zu Fig. 2 verwiesen.

Ab dem Zeitpunkt t₁ jedoch verhält sich der Luftsack völlig andersartig. Zunächst sinkt der Innendruck nicht auf den niedrigen Wert P₁ ab, wie dies beim Luftsack gemäß dein Stand der Technik der Fall ist. Aufgrund des Nichtauftretens einer Leckage einer bereits zum jetzigen Zeitpunkt geöffneten Luftaustrittsöffnung erreicht der Innendruck mit dem Wert P₂ seinen niedrigsten Wert, der etwa das zwei- bis dreifache des Wertes P₁ beträgt. Sämtliches vom Gasgenerator in den Luftsack 10 geleitetes Gas trägt zum Aufbau des Innendruckes ab dein Zeitpunkt t₁ bei. Im Zeitpunkt t₅ beginnt der in das Luftsackinnere gestülpte Schlauch 50 damit, nach außen abzurollen, wodurch eine kurzfristige Volumenvergrößerung stattfindet, so daß trotz weiter zuströmenden Gases der Druck auf dem Niveau P₃ im wesentlichen konstant bleibt bis zum Zeitpunkt t₆, in dem die Luftaustrittsöffnung 40 freigegeben ist, wonach Gas aus dem Luftsack nach außen strömt und der Innendruck dementsprechend absinkt.

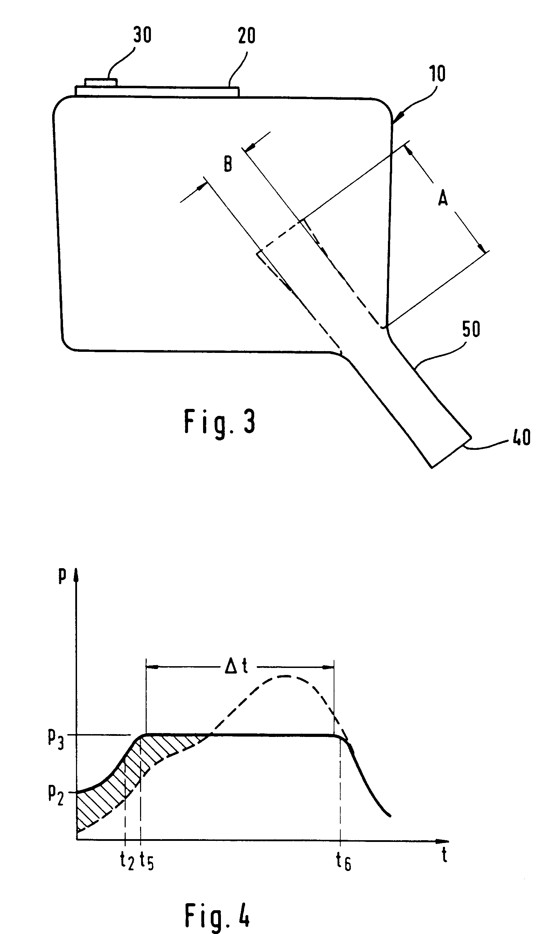

Die Zeitdauer zwischen dem Zeitpunkt t₅ und t₆ mit konstantem Innendruck kann bis zu 50 ms. betragen. Die effektive Länge wird vorgegeben durch das Verhältnis der in das Luftsackinnere gestülpten Länge A (Fig. 3) des Schlauches 50 sowie dessen Durchmesser B. Durch Veränderung des Quotienten B/A wird dementsprechend die Charakteristik des Innendruckverlaufs vorbestimmt.

Der strichlierte Bereich zwischen der Charakteristik des Luftsackes gemäß dem Stand der Technik und der Charakteristik des erfindungsgemäßen Luftsackes stellt den Zegewinn einer Sicherheitsreserve dar, da der Innenruck im erfindungsgemäßen Luftsack 10 bereits zu einem wesentlich früheren Zeitpunkt als beim bekannten Luftsack die nötigen Druckwerte erreicht. Der Zeitgewinn kann bei einigen Millisekunden liegen und wirkt sich bereits bei diesen Werten entscheidend positiv aus, da der Luftsack um diesen zeitlichen Gewinn bereits ein zufriedenstellendes Dämpfungsverhalten bei Körperkontakt zeigt. Zur Veranschaulichung ist in Fig. 4 auch der Zeitpunkt t₂ aus Fig. 2 mit eingetragen, welcher - wie beschrieben - den Zeitpunkt des Körperkontaktes repräsentiert. Der zu diesem Zeitpunkt t₂ im erfindungsgemäßen Luftsack 10 aufgebaute Innendruck beträgt im gezeigten Beispiel etwa das Doppelte desjenigen Innendruckes, welcher zum Zeitpunkt t₂ im Luftsack gemäß dem Stand der Technik herrscht.

## Patentansprüche

1. Airbagmodul, aufweisend einen Gasgenerator, der auf ein Auslösesignal hin schlagartig Gas in einen Luftsack (10) aus im wesentlichen luftundurchlässigem Material leitet, der eine Luftaustrittsöffnung (40) aufweist, durch welche das Gas nach einer Verweildauer im Luftsack (10) aus diesem ausströmt, wobei die Luftaustrittsöffnung (40) ihren wirksamen Öffnungsquerschnitt nach Aktivierung des Moduls zeitverzögert freigibt,
dadurch gekennzeichnet,
daß die Luftaustrittsöffnung (40) am Ende eines schlauchförmigen Ansatzes (50) am Luftsack (10) angeordnet ist, welcher im nichtbefüllten Zustand des Luftsackes in diesen hineingestülpt ist, so daß die Luftaustrittsöffnung (40) ihren wirksamen Öffnungsquerschnitt so zeitverzögert freigibt, daß der Gasdruck im Inneren des Luftsackes (10) für eine Zeitdauer von bis zu 50 ms im wesentlichen konstant bleibt.

2. Airbagmodul nach Anspruch 1, dadurch gekennzeichnet, daß ein elektronisch gesteuertes Ventil die Freigabe des Lumens der Luftaustrittsöffnung steuert.

## Claims

1. Airbag module having a gas generator which conveys gas suddenly into an air bag (10) made from essentially air-impermeable material on a triggering signal, which has an air outlet opening (40) through which, after a dwell time in the air bag (10), the gas flows out from the latter, wherein the air outlet opening (40) releases its effective opening cross-section in time-delayed manner after activating the module, characterised in that the air outlet opening (40) is arranged at the end of a hose-like attachment (50) on the air bag (10), which in the non-filled state of the air bag is turned inside the latter, so that the air outlet opening (40) releases its effective opening cross-section in time-delayed manner so that the gas pressure remains essentially constant in the interior of the air bag (10) for a period of time of up to 50 ms.

2. Airbag module according to claim 1, characterised in that an electronically controlled valve controls the clearing of the lumen of the air outlet opening.

## Revendications

1. Module de coussin gonflable, comprenant un générateur de gaz qui, dès la réception d'un signal de déclenchement, fait affluer instantanément du gaz dans un coussin gonflable (10), réalisé dans un matériau sensiblement imperméable à l'air et muni d'un orifice de sortie d'air (40), par lequel le gaz s'échappe hors du coussin gonflable (10) après une durée de séjour déterminée dans celui-ci, l'orifice de sortie d'air (40) libérant sa section de passage active avec un certain retard par rapport à l'activation du module, caractérisé en ce que l'orifice de sortie d'air (40) est formé sur le coussin gonflable à l'extrémité d'un embout (50) en forme de tuyau flexible, qui est retourné à l'intérieur du coussin gonflable à l'état non gonflé, de telle sorte que l'orifice de sortie d'air (40) libère avec un certain retard sa section de passage active, de telle sorte que la pression de gaz à l'intérieur du coussin gonflable (10) reste sensiblement constante pendant une durée de 50 millisecondes maximum.

2. Module de coussin gonflable selon la revendication 1, caractérisé en ce qu'une vanne à commande électronique commande l'ouverture de l'orifice de sortie d'air.
